# EUROPEAN PATENT SPECIFICATION

(11) **EP 3 276 174 B1**
(45) Date of publication and mention of the grant of the patent: **23.01.2019**
(21) Application number: 17153096.7
(22) Date of filing: 25.01.2017
(51) Int. Cl.: F04B 35/04, F04B 39/00

(54) **SEALED REFRIGERANT COMPRESSOR AND REFRIGERATION DEVICE**
ABGEDICHTETER KÄLTEMITTELVERDICHTER UND KÜHLVORRICHTUNG
COMPRESSEUR HERMÉTIQUE DE RÉFRIGÉRANT ET DISPOSITIF DE RÉFRIGÉRATION

(30) Priority: 29.07.2016 JP 2016149265
(43) Date of publication of application: 31.01.2018
(73) Proprietor: Panasonic Corporation, Osaka 571-8501 (JP)
(72) Inventor: KOBAYASHI, Hidenori, OSAKA, 540-6207 (JP); SUMI, Masaki, OSAKA, 540-6207 (JP); IDE, Terumasa, OSAKA, 540-6207 (JP); KUBOTA, Akihiko, OSAKA, 540-6207 (JP)
(74) Representative: Eisenführ Speiser

(56) References cited:
- JP-A- 2005 269 695
- JP-A- 2005 341 749
- JP-A- 2006 077 634
- JP-A- 2013 087 685
- US-A- 4 386 859

## Description

### BACKGROUND OF THE INVENTION

### 1. Field of the invention

The present invention relates to a reciprocating sealed refrigerant compressor which reciprocates a piston inside a cylinder to compress a refrigerant, and a refrigeration device including this sealed refrigerant compressor.

### 2. Description of the Related Art

A reciprocating refrigerant compressor is configured to accommodate an electric component and a compression component in a sealed container. Lubricating oil is reserved in the sealed container. The lubricating oil is reserved in a lower portion of the interior of the sealed container. The compression component includes a cylinder and a piston. When a vertical direction of the sealed container is a longitudinal direction, the cylinder and the piston are disposed to extend in a lateral direction (direction perpendicular to the vertical direction). The compression component is configured to compress the refrigerant in such a manner that the electric component causes the piston to reciprocate inside the cylinder.

Conventionally, the reciprocating refrigerant compressor is required to provide a low vibration. In recent years, the reciprocating refrigerant compressor is required to provide a lower vibration and have a smaller size. As described above, in the reciprocating refrigerant compressor, the cylinder and the piston of the compression component are disposed to extend in a lateral direction. For this reason, an unbalanced load in the lateral direction tends to occur due to the reciprocating motion of the piston. The unbalanced load is a significant cause of a vibration of the refrigerant compressor.

As a conventional method for cancelling or relieving the unbalanced load state, it is known that a balance weight is mounted on the compression component or the electric component. The compression component includes a crankshaft having a main shaft section rotatably mounted on the cylinder block. It is known that the balance weight is mounted on the crankshaft. The electric component includes a stator and a rotor. It is also known that the balance weight is mounted on the upper surface or lower surface of the rotor.

However, mounting the balance weight results in an increase in the number of members of the refrigerant compressor and an increase in the number of manufacturing steps of the refrigerant compressor. This increases manufacturing cost. To avoid this, Japanese Laid-Open Patent Application Publication No. 2013-087685 discloses a configuration in which the balance weight is secured to an eccentric shaft of the crankshaft of the compression component, and the end surface of the rotor of the electric component is provided with an end plate integrated with a weight member comprising a rolled member having a portion bent at a right angle. Since the weight member is integrated with the end plate, assembling work steps can be made easier and the number of members does not increase.

### SUMMARY OF THE INVENTION

In recent years, the sealed refrigerant compressor is required to provide a lower vibration and have a smaller size than the conventional sealed refrigerant compressor. In the above-described method of mounting the balance weight, it is necessary to secure a space for the balance weight in the interior of the sealed container, depending on a mounting location of the balance weight. For this reason, the size of the refrigerant compressor may not be reduced.

The present invention has been developed to solve the above-described problem, and an object of the present invention is to provide a reciprocating sealed refrigerant compressor which can realize a lower vibration and a smaller size.

To solve the above described problem, according to a first aspect of the present disclosure, a sealed refrigerant compressor comprising a sealed container in which lubricating oil is reserved in a lower portion in an interior of the sealed container; an electric component accommodated in the sealed container; and a compression component accommodated in the sealed container and configured to be driven by the electric component, wherein the compression component includes a cylinder disposed inside the sealed container to extend in a direction crossing a vertical direction, and a piston which is reciprocatable inside the cylinder, is characterized in that the electric component includes a stator, and a rotor having a lower surface facing an oil surface of the lubricating oil, and the rotor has a shape in which a diameter of the rotor is larger than a length of the rotor in a rotational axis direction thereof, and a core of the rotor is provided with at least one balance hole for adjusting a load balance during rotation of the rotor.

In accordance with this configuration, in the reciprocating sealed refrigerant compressor, the core of the rotor with a large diameter is provided with at least one balance hole, and thus an unbalanced load state can be cancelled or relieved as in the case of providing the balance weight. It is sufficient that at least one balance hole is provided in the core of the rotor. Therefore, depending on the unbalanced load state of the sealed refrigerant compressor, the balance hole with a simple structure can be provided more flexibly. Since the load of the rotor can be adjusted into an unbalanced state, the load balance of the whole of the sealed refrigerant compressor can be adjusted well. As a result, the sealed refrigerant compressor can realize a lower vibration and a smaller size.

According to another aspect of the present disclosure, a refrigeration device comprises the above sealed refrigerant compressor.

In accordance with the above-described configuration of the present invention, it becomes possible to obtain advantages that the sealed refrigerant compressor can realize a lower vibration and a smaller size.

The above and further objects, features and advantages of the present invention will more fully be apparent from the following detailed description of preferred embodiment with reference to accompanying drawings.

### BRIEF DESCRIPTION OF THE DRAWINGS

Fig. 1 is a cross-sectional view showing the exemplary configuration of a sealed refrigerant compressor according to Embodiment 1 of the present disclosure.
Figs. 2A to 2C are views showing the exemplary configuration of a rotor included in the sealed refrigerant compressor of Fig. 1.
Figs. 3A to 3D are views showing another exemplary configuration of the rotor of Figs. 2A to 2C.
Figs. 4A to 4C are views showing another exemplary configuration of the rotor included in the sealed refrigerant compressor of Fig. 1.
Fig. 5 is a cross-sectional view showing the exemplary configuration of a sealed refrigerant compressor according to Embodiment 2 of the present disclosure.
Figs. 6A to 6C are views showing another exemplary configuration of an electric component included in the sealed refrigerant compressor of Fig. 4.
Fig. 7 is a schematic view showing the exemplary configuration of an article storage device according to Embodiment 3 of the present disclosure.

### DETAILED DESCRIPTION OF THE EMBODIMENTS

A sealed refrigerant compressor of the present disclosure comprising a sealed container in which lubricating oil is reserved in a lower portion in an interior of the sealed container; an electric component accommodated in the sealed container; and a compression component accommodated in the sealed container and configured to be driven by the electric component, wherein the compression component includes a cylinder disposed inside the sealed container to extend in a direction crossing a vertical direction, and a piston which is reciprocatable inside the cylinder, is characterized in that the electric component includes a stator, and a rotor having a lower surface facing an oil surface of the lubricating oil, and the rotor has a shape in which a diameter of the rotor is larger than a length of the rotor in a rotational axis direction thereof, and a core of the rotor is provided with at least one balance hole for adjusting a load balance during rotation of the rotor.

In accordance with this configuration, in the reciprocating sealed refrigerant compressor, the core of the rotor with a large diameter is provided with at least one balance hole, and thus the unbalanced load state can be cancelled or relieved as in the case of providing the balance weight. It is sufficient that at least one balance hole is provided in the core of the rotor. Therefore, depending on the unbalanced load state of the sealed refrigerant compressor, the balance hole with a simple structure can be provided more flexibly. Since the load of the rotor can be adjusted into an unbalanced state, the load balance of the whole of the sealed refrigerant compressor can be adjusted well. As a result, the sealed refrigerant compressor can realize a lower vibration and a smaller size.

In the above sealed refrigerant compressor, the rotor may include a permanent magnet and does not include a magnet protective member covering an outer periphery of the permanent magnet provided in the core, and the at least one balance hole may be located not to be line-symmetric or point-symmetric with respect to a rotational axis of the rotor.

In accordance with this configuration, even in the configuration in which the at least one balance hole is located not to be line-symmetric or point-symmetric with respect to the rotational axis of the rotor, it becomes possible to substantially suppress or avoid a situation in which a change in a magnetic field attributed to the balance hole virtually affects the electric component. Therefore, the size of the balance hole can be reduced, and the shape of the balance hole can be simplified. In addition, the balance hole(s) can be disposed at any location(s) which is/are other than the symmetric location. Therefore, depending on the unbalanced load state of the sealed refrigerant compressor, the balance hole with a simpler structure can be provided more flexibly. Since the load of the rotor can be adjusted into an unbalanced state, the load balance of the whole of the sealed refrigerant compressor can be adjusted well. As a result, the sealed refrigerant compressor can realize a lower vibration and a smaller size.

In the above sealed refrigerant compressor, the at least one balance hole may be provided in the core in such a manner that at least a part of the balance hole is located outward relative to the permanent magnet when viewed from the rotational axis direction of the rotor (in a plan view).

In the above sealed refrigerant compressor, the compression component may be accommodated in the sealed container in such a manner that the compression component is located above the electric component.

In the above sealed refrigerant compressor, the at least one balance hole may extend in the rotational axis direction of the rotor.

In the above sealed refrigerant compressor, the at least one balance hole may be a through-hole.

In the above sealed refrigerant compressor, a balance weight may be fastened to an upper surface of the rotor to adjust a load balance, and the balance hole may be provided within a portion of the core of the rotor to which the balance weight is fastened.

In the above sealed refrigerant compressor, the at least one balance hole may be a blind hole having a bottom surface which is set to be higher than an upper surface of the stator.

According to another aspect of the present disclosure, a refrigeration device comprises the above sealed refrigerant compressor.

Hereinafter, exemplary embodiments of the present disclosure will be described with reference to the accompanying drawings. Throughout the drawings, the same or corresponding components are designated by the same reference symbols, and will not be described in repetition.

### (Embodiment 1)

### [Configuration of Sealed Refrigerant Compressor]

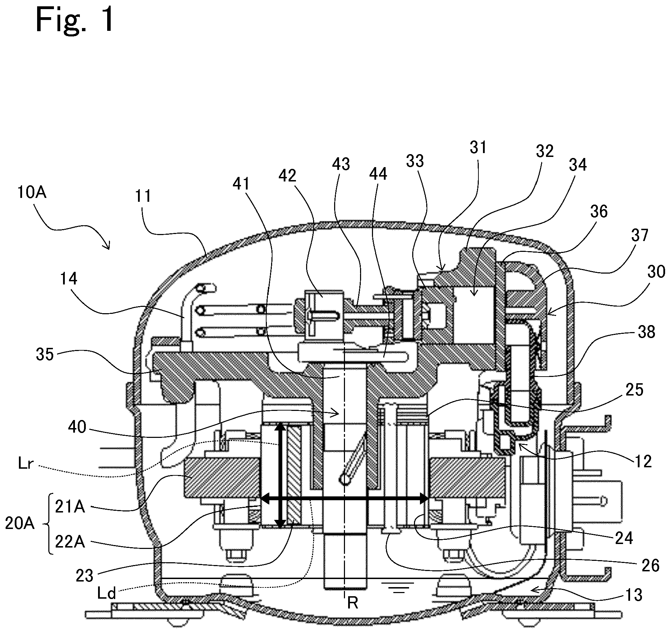

Referring to Fig. 1, a sealed refrigerant compressor 10A according to Embodiment 1 includes an electric component 20A and a compression component 30 which are accommodated in a sealed container 11, and a refrigerant gas and lubricating oil 13 are reserved in the sealed container 11. The electric component 20A and the compression component 30 constitute a compressor body 12. The compressor body 12 is disposed inside the sealed container 11 in a state in which the compressor body 12 is elastically supported by a suspension spring (not shown) provided on the bottom portion of the sealed container 11.

The sealed container 11 is provided with a suction pipe (not shown) and a discharge pipe (not shown). The first end of the suction pipe is in communication with the inner space of the sealed container 11, and the second end thereof is connected to a refrigeration device (not shown), thus constituting a refrigeration cycle such as a refrigerant circuit. The first end of the discharge pipe is connected to the compression component 30, and the second end thereof is connected to the refrigeration device. As will be described later, the refrigerant gas having been compressed by the compression component 30 is led to the refrigerant circuit through the discharge pipe, while the refrigerant gas from the refrigerant circuit is led to the inner space of the sealed container 11 through the suction pipe.

The specific configuration of the sealed container 11 is not particularly limited. In the present embodiment, the sealed container 11 is manufactured by, for example, drawing of an iron plate. The refrigerant gas is reserved in the sealed container 11 in a relatively low temperature state and at a pressure which is substantially equal to that on a low-pressure side in the refrigerant circuit including the sealed refrigerant compressor 10A. Lubricating oil 13 is reserved in the sealed container 11 and lubricates a crankshaft 40 (which will be described later) included in the compression component 30. As shown in Fig. 1, the lubricating oil 13 is reserved in the bottom portion of the sealed container 11.

The kind of the refrigerant gas is not particularly limited. The refrigerant gas known in the field of the refrigeration cycle is suitably used. In the present embodiment, for example, R600a which is a hydrocarbon based refrigerant gas is suitably used. R600a has a relatively low global warming potential (GNP). For the purpose of protection of global environments, R600a is one of refrigerant gases suitably used. The kind of the lubricating oil 13 is not particularly limited. The lubricating oil known in the field of the compressor is suitably used.

As shown in Fig. 1, the electric component 20A includes at least a stator 21A and a rotor 22A. The stator 21A is secured to the lower side of a cylinder block 31 (which will be described later) included in the compression component 30 by use of a fastener member such as a bolt (not shown). The rotor 22A is disposed inward relative to the stator 21A and coaxially with the stator 21A. The rotor 22A is configured to secure a main shaft section 41 of the crankshaft 40 (which will be described later) included in the compression component 30 by, for example, shrinkage fitting (thermal insert).

As shown in Fig. 1, the rotor 22A rotates around a rotational axis R extending in a longitudinal direction and indicated by one-dotted line. The rotor 22A is disposed inside the sealed container 11 in such a manner that the lower surface of the rotor 22A faces the oil surface of the lubricating oil 13. As shown by black block arrows of Fig. 1, when the length of the rotor 22A in the direction of the rotational axis R is Lr, and the diameter of the rotor 22A is Ld, the length Lr is smaller than the diameter Ld (Lr < Ld). In brief, the rotor 22A has a structure in which the diameter Ld is larger than the axial length Lr of the rotor 22A. The rotor 22A is elongated in the lateral direction.

The upper surface of the rotor 22A faces a bearing unit 35 which is a part of the cylinder block 31 (which will be described later). The stator 21A has a plurality of winding wires. The rotor 22A has a plurality of permanent magnets 23 facing the plurality of winding wires. In the present embodiment, as shown in Fig. 1, the rotor 22A has a configuration in which the plurality of permanent magnets 23 are embedded in a core (iron core) which is the body of the rotor 22A. The electric component 20A is an interior permanent magnet motor (IPM) motor.

As described above, since the rotor 22A is disposed inward relative to the stator 21A, the electric component 20A is an inner rotor motor. The rotor 22A has a structure in which the core is formed with balance through-holes 24A and a balance weight 25 is mounted on the upper surface of the core. The electric component 20A is connected to an external inverter drive circuit (not shown), and is inverter-driven at one of a plurality of operating frequencies. The specific configuration of the rotor 22A will be described later.

The compression component 30 is driven by the electric component 20A and is configured to compress the refrigerant gas. In the present embodiment, as shown in Fig. 1, the compression component 30 is accommodated in the sealed container 11 in such a manner that the compression component 30 is located above the electric component 20A. As shown in Fig. 1, the compression component 30 includes the cylinder block 31, a cylinder 32, a piston 33, a compression chamber 34, the bearing unit 35, the crankshaft 40, a valve plate 36, a cylinder head 37, a suction muffler 38, etc.

The cylinder block 31 is provided with the cylinder 32 and the bearing unit 35. The cylinder 32 is disposed to extend in a direction crossing a vertical direction, and fastened to the bearing unit 35. More specifically, when the vertical direction is a longitudinal direction and a horizontal direction (direction perpendicular to the vertical direction) is a lateral direction, in a state in which the sealed refrigerant compressor 10A is placed on a horizontal plane, the cylinder 32 is disposed to extend in the lateral direction in the interior of the sealed container 11 and fastened to the bearing unit 35.

A bore having a substantially cylindrical shape and a diameter that is substantially equal to that of the piston 33 is provided inside the cylinder 32. The piston 33 is reciprocatingly inserted into the bore. The cylinder 32 and the piston 33 define the compression chamber 34. The refrigerant gas is compressed in the compression chamber 34. The bearing unit 35 supports the main shaft section 41 of the crankshaft 40 in such a manner that the main shaft section 41 is rotatable.

The crankshaft 40 is supported inside the sealed container 11 in such a manner that the axis of the crankshaft 40 extends in the longitudinal direction. The crankshaft 40 includes the main shaft section 41, an eccentric shaft section 42, a connecting rod 43, a flange portion 44, an oil feeding mechanism (not shown), etc. As described above, the main shaft section 41 of the crankshaft 40 is secured to the rotor 22A of the electric component 20A. The eccentric shaft section 42 is eccentric with respect to the main shaft section 41. The connecting rod 43 is a coupling section coupling the eccentric shaft section 42 and the piston 33 to each other. The flange portion 44 integrally connects the eccentric shaft section 42 and the main shaft section 41 to each other. The oil feeding mechanism is provided so that the lower end of the main shaft section 41 which is immersed in the lubricating oil 13 is in communication with the upper end of the eccentric shaft section 42. The oil feeding mechanism is formed by, for example, an oil feeding pump and a spiral groove formed on the surface of the main shaft section 41. The oil feeding mechanism feeds the lubricating oil 13 to the crankshaft 40.

As described above, the piston 33 inserted into the cylinder 32 is coupled to the connecting rod 43. The piston 33 is disposed in such a manner that the axis of the piston 33 crosses the axial direction of the crankshaft 40. In the present embodiment, the crankshaft 40 is disposed in such a manner its center axis extends in the longitudinal direction (its axial direction). In contrast, the piston 33 is disposed in such a manner its center axis extends in the lateral direction (its axial direction). Therefore, the axial direction of the piston 33 is perpendicular to the axial direction of the crankshaft 40. As described above, the connecting rod 43 couples the piston 33 and the eccentric shaft section 42 to each other. Therefore, the rotational motion of the crankshaft 40 rotating by the electric component 20A is transmitted to the piston 33 via the connecting rod 43. This causes the piston 33 to reciprocate inside the cylinder 32.

As described above, the piston 33 is inserted into the first end portion (on the crankshaft 40 side) of the cylinder 32. The second end portion (away from the crankshaft 40) is closed by the valve plate 36 and the cylinder head 37. The valve plate 36 is located between the cylinder 32 and the cylinder head 37. The valve plate 36 is provided with a suction valve (not shown) and a discharge valve (not shown). The cylinder head 37 is formed with a discharge space therein. The refrigerant gas from the compression chamber 34 is discharged into the discharge space of the cylinder head 37 when the discharge valve of the valve plate 36 is opened. The cylinder head 37 is in communication with the discharge pipe (not shown).

The suction muffler 38 is located on a lower side in the interior of the sealed container 11, from the perspective of the cylinder 32 and the cylinder head 37. The suction muffler 38 has a muffling space therein. The suction muffler 38 is in communication with the compression chamber 34 via the valve plate 36. When the suction valve of the valve plate 36 is opened, the refrigerant gas in the interior of the suction muffler 38 is suctioned into the compression chamber 34.

### [Operation of Sealed Refrigerant Compressor]

Next, the operation of the sealed refrigerant compressor 10A having the above-described configuration will be specifically described in conjunction with advantages thereof. Although not shown in Fig. 1, the suction pipe and the discharge pipe of the sealed refrigerant compressor 10A are connected to the refrigeration device having a well-known configuration, and constitute the refrigerant circuit.

When electric power is supplied from an external power supply to the electric component 20A, a current flows through the stator 21A and a magnetic field is generated, which causes the rotor 22A to rotate. According to the rotation of the rotor 22A, the main shaft section 41 of the crankshaft 40 rotates. The rotation of the main shaft section 41 of the crankshaft 40 is transmitted to the piston 33 via the flange portion 44, the eccentric shaft section 42, and the connecting rod 43, and thereby the piston 33 reciprocates inside the cylinder 32. Correspondingly, the refrigerant gas is suctioned, compressed, and discharged inside the compression chamber 34.

Hereinafter, of directions in which the piston 33 moves inside the cylinder 32, a direction in which the volume of the compression chamber 34 increases will be referred to "increase direction", and a direction in which the volume of the compression chamber 34 decreases will be referred to "decrease direction." When the piston 33 moves in the increase direction, the refrigerant gas in the interior of the compression chamber 34 is expanded. Then, when a pressure in the compression chamber 34 falls below a suction pressure, the suction valve of the valve plate 36 starts to be opened due to a difference between the pressure in the compression chamber 34 and a pressure in the suction muffler 38.

According to this operation, the refrigerant gas with a low temperature, which has been returned from the refrigeration device, is released to the inner space of the sealed container 11 through the suction pipe. Then, the refrigerant gas is introduced into the muffling space of the suction muffler 38. At this time, as described above, the suction valve of the valve plate 36 starts to be opened. Therefore, the refrigerant gas having been introduced into the muffling space of the suction muffler 38 flows into the compression chamber 34. Then, when the piston 33 moves in the decrease direction from a bottom dead center inside the cylinder 32, the refrigerant gas in the interior of the compression chamber 34 is compressed, and the pressure in the compression chamber 34 increases. Also, due to the difference between the pressure in the compression chamber 34 and the pressure in the suction muffler 38, the suction valve of the valve plate 36 is closed.

Then, when the pressure in the compression chamber 34 exceeds a pressure in the cylinder head 37, the discharge valve (not shown) starts to be opened, due to the difference between the pressure in the compression chamber 34 and the pressure in the cylinder head 37. According to this operation, the compressed refrigerant gas is discharged into the cylinder head 37, until the piston 33 reaches a top dead center inside the cylinder 32. Then, the refrigerant gas having been discharged into the cylinder head 37 is sent out to the refrigeration device through the discharge pipe.

Then, when the piston 33 moves in the increase direction again from the top dead center inside the cylinder 32, the refrigerant gas in the interior of the compression chamber 34 is expanded, which decreases the pressure in the compression chamber 34. When the pressure in the compression chamber 34 falls below the pressure in the cylinder head 37, the discharge valve of the valve plate 36 is closed.

The above-described suction, compression, and discharge strokes are performed in repetition in every rotation of the crankshaft 40, and thus the refrigerant gas is circulated within the refrigeration cycle.

### [Configuration of Rotor]

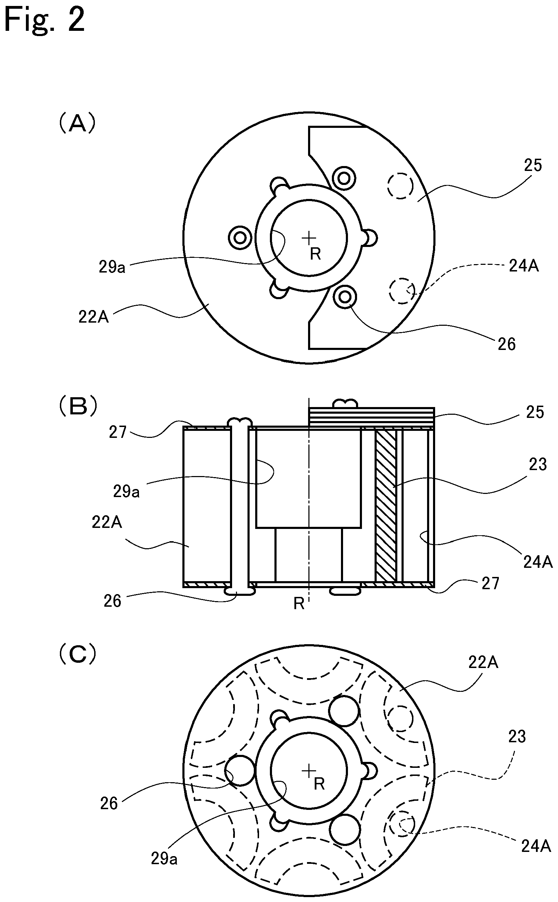

In the sealed refrigerant compressor 10A according to the present embodiment, as shown in Figs. 1 and 2A to 2C, the rotor 22A of the electric component 20A is provided with the balance through-holes 24A. As described above, the rotor 22A according to the present embodiment is the IPM rotor, and therefore, the permanent magnets 23 are embedded in the core which is the body of the rotor 22A. As shown in Fig. 2C, the balance through-holes 24A are provided in the core at locations that are other than the locations at which the permanent magnets 23 are embedded in the core. In the present embodiment, as indicated by broken lines of Fig. 2C, the permanent magnets 23 are entirely embedded in the core. In this structure, the rotor 22A does not include magnet protective members covering the outer peripheral surfaces of the permanent magnets 23. In other words, the rotor 22A does not require the magnet protective members for covering the permanent magnets 23.

As shown in Figs. 2A to 2C, the rotor 22A has a rotor shaft hole 29a at a center thereof. The main shaft section 41 of the crankshaft 40 and the lower end of the bearing unit 35 of the cylinder block 31 are insertable into the rotor shaft hole 29a. Therefore, the center line in the extending direction of the rotor shaft hole 29a conforms to the rotational axis R of the rotor 22A. Fig. 2A which is the plan view and Fig. 2C which is the bottom view indicate the rotational axis R by a cross mark, while Fig. 2B which is the longitudinal sectional view indicates the rotational axis R by one-dotted line.

As can be seen from Fig. 2B, the rotor shaft hole 29a has a shape in which its upper part and its lower part are different from each other in inner diameter (its upper part and its lower part have different inner diameters). The rotor shaft hole 29a has a stepped part so that a portion of the bearing unit 35 into which the main shaft section 41 is inserted is inserted into the upper part of the rotor shaft hole 29a, and only the main shaft section 41 is inserted into the lower part of the rotor shaft hole 29a. As shown in Fig. 1, the bearing unit 35 constitutes the lower part of the cylinder block 31. In the present embodiment, the bearing unit 35 extends in the lateral direction over the entire sealed container 11. The center part of the bearing unit 35 has a cylindrical shape protruding in a downward direction. The upper part of the main shaft section 41 is inserted into the center part of the bearing unit 35. Therefore, the rotor shaft hole 29a has a shape in which the diameter of the upper part is greater than that of the lower part. In this structure, the upper part of the rotor shaft hole 29a supports the cylindrical portion of the bearing unit 35 (and the main shaft section 41 inserted into the cylindrical portion of the bearing unit 35) in a state in which the cylindrical portion of the bearing unit 35 is inserted into the rotor shaft hole 29a, and the lower part supports only the main shaft section 41 inserted into the rotor shaft hole 29a.

The core constituting the body of the rotor 22A has a configuration in which a plurality of electromagnetic steel plates (thin iron plates) of a disc shape are stacked together (laminated). To integrate the plurality of electromagnetic steel plates to construct the core, fastener members are provided to penetrate the plurality of electromagnetic steel plates in the direction of the rotational axis R, as shown in Figs. 1 and 2B. In the present embodiment, as shown in Figs. 2A and 2B, the plurality of electromagnetic steel plates are integrated together by use of caulking pins 26. The plurality of electromagnetic steel plates are formed with caulking holes, respectively, into which the caulking pins 26 are inserted.

As shown in Fig. 2B, end plates 27 are provided on the upper surface and lower surface of the rotor 22A, respectively. Therefore, the upper ends and lower ends of the balance through-holes 24A are closed by the end plates 27. As shown in Figs. 1 and 2B, a balance weight 25 (which will be described later) is fastened to the upper surface of the rotor 22A. Therefore, the balance weight 25 is located on the upper side of the end plate 27. In the example of Fig. 2A, the balance through-holes 24A are indicated by broken lines, while in the example of Fig. 2C, the permanent magnets 23 and the balance through-holes 24A are indicated by broken lines.

The balance through-holes 24A are balance holes for adjusting a load balance during the rotation of the rotor 22A. In the present embodiment, two balance through-holes 24A are provided. As shown in Figs. 1 and 2B, the balance through-holes 24A extend in the direction of the rotational axis R of the rotor 22A. As shown in Figs. 2A and 2C, when viewed from the lower surface of the rotor 22A, the two balance through-holes 24A are eccentrically located in a portion of the rotor 22A which is in the vicinity of the outer periphery of the rotor 22A. In other words, in the present embodiment, the plurality of balance through-holes 24A of the rotor 22A are provided for the eccentric location in the core which is the body of the rotor 22A in such a manner that the balance through-holes 24A are not point-symmetric or line-symmetric with respect to the rotational axis R.

A sealed refrigerant compressor of a rotary type as well as the sealed refrigerant compressor of a reciprocating type is known. In the sealed refrigerant compressor of a rotary type, the rotor is typically elongated in the longitudinal direction. Specifically, the length Lr of the rotor in the rotational axis direction is set to be larger than the diameter Ld (Lr > Ld) of the rotor. Conventionally, in the sealed refrigerant compressor of a rotary type, it is known that the core of the rotor is formed with a plurality of balance blind holes which are line-symmetric or point-symmetric with respect to the rotational axis of the rotor.

In one example, in the sealed refrigerant compressor of a rotary type, each of the upper end surface and lower end surface of the rotor is formed with two balance blind holes which are adjacent to each other and occupy almost one fourth of each of the end surfaces. The balance blind holes of each of the upper end surface and lower end surface of the rotor are point-symmetric with respect to the rotational axis of the rotor. The balance blind holes having such a configuration can adjust a load balance by adjusting their depths rather than their positions.

In another example, the core of the rotor is formed with a first balance through-hole and a second balance through-hole which are line-symmetric with respect to the rotational axis of the rotor. In this configuration, if the balance through-holes have the same shape, they function to cancel (counteract) effects of adjusting the load balance. To avoid this, a portion of one of the first and second balance through-holes is set to have a smaller diameter, the depth of the blind hole is adjusted instead of the use of the through-hole, or one of the first and second balance through-holes is composed of a plurality of balance through-holes, in order to minimize cancellation of the load balance.

As described the above, in the conventional sealed refrigerant compressor of a rotary type, in a case where the core of the rotor elongated in the longitudinal direction is formed with the plurality of balance holes which are point-symmetric or line-symmetric with respect to the rotational axis of the rotor. The balance holes have a large size and occupy about the half of the circumference of the rotor, or have a complicated structure in which the balance holes are different from each other in diameter, depth, or the number.

It is also conventionally known that the core of the rotor of the electric component is formed with a slit hole in order to mitigate an unbalanced magnetic flux density or a magnetic salient-pole property. In view of this, if the core of the rotor is improperly formed with a hole, an undesired change in a magnetic field (disorder of the magnetic field) may occur. It is known that a surface permanent magnet motor (SPM) comprises, for example, a magnet protective member (cover) made of stainless steel, to protect the permanent magnets. Depending on the configuration of the rotor or the stator, the magnet protective member cause an undesired change in a magnetic field (disorder of the magnetic field). To prevent or avoid the problem associated with the magnet protective member, the IPM motor is configured in such a manner that the permanent magnets are embedded in the core.

In the above-described sealed refrigerant compressor of a rotary type, in which the core of the rotor is formed with the balance holes, the rotor is required to have the magnet protective members. In this case, if the balance holes are provided to be non-symmetric with respect to the rotational axis of the rotor, the degree of the disorder of the magnetic field may be increased due to the presence of magnet protective members. For this reason, it is presumed that the balance holes are required to be point-symmetric or line-symmetric with respect to the rotational axis of the rotor, as described above.

Regarding the above-described problem, the present inventors intensively studied. In the reciprocating sealed refrigerant compressor, to reduce the size of the compressor, the rotor is elongated in the lateral direction (see Fig. 1 or the like), and the diameter Ld of the rotor is set to be larger than the length Lr of the rotor in the rotational axis direction (Ld > Lr). Also, in the reciprocating sealed refrigerant compressor, the IPM motor which does not require the magnet protective members or the SPM motor which does not include the magnet protective members is used.

In the electric component 20A which does not require the magnet protective members, it can be revealed that by forming in the core of the rotor, the plurality of balance holes which are non-symmetric with respect to the rotational axis R, it becomes possible to well adjust the load balance of the rotor 22A without providing the large balance holes or the balance holes with a complicated shape, like the sealed refrigerant compressor of a rotary type.

As described above, the rotor 22A of the present embodiment is formed with the plurality of balance through-holes 24A which are non-symmetric with respect to the rotational axis R without providing the magnet protective members. This configuration can substantially suppress or avoid a situation in which the disorder of the magnetic field attributed to the balance through-holes 24A virtually affects the electric component 20A. Therefore, the size of the balance through-holes 24A can be reduced, and the shape of the balance through-holes 24A can be simplified. In addition, the balance through-holes 24A can be disposed at any locations which are other than the symmetric locations. Thus, the balance through-holes 24A with a simpler configuration can be disposed more flexibly, depending on the unbalanced load state of the sealed refrigerant compressor 10A. As a result, the load balance of the rotor 22A can be adjusted well, and the sealed refrigerant compressor 10A can realize a lower vibration and a smaller size.

As shown in Figs. 1, 2A, and 2B, in the rotor 22A of the present embodiment, the balance weight 25 is fastened to the upper surface of the rotor 22A. This balance weight 25 is similar to that used to adjust the load balance of the rotor 22A in the conventional configuration. In the present embodiment, the balance weight 25 is fastened to the upper surface of the rotor 22A rather than the lower surface of the rotor 22A. The plurality of balance through-holes 24A are provided within a portion of the core of the rotor 22A to which the balance weight 25 is fastened. In other words, it is sufficient that when viewed from the upper surface or lower surface of the rotor 22A, the plurality of balance through-holes 24A are provided in the core at locations on a projection plane of the balance weight 25.

Since the balance weight 25 are positioned in the core of the rotor 22A, at the locations on the projection plane of the balance holes, the balance of the rotor 22A can be improved more flexibly. For example, by providing the balance holes in the core of the rotor 22A, the load balance can be roughly adjusted. In addition to this, by mounting the balance weight 25 on the core, the load balance can be finely adjusted.

The balance holes which can adjust the load balance can be formed without increasing the number of members or manufacturing steps, in manufacturing the sealed refrigerant compressor 10A. However, the formation of the balance holes in the core of the rotor 22A is less flexible in the manufacturing steps than mounting the balance weight 25 on the core of the rotor 22A is. In contrast, mounting the balance weight 25 on the core of the rotor 22A causes an increase in the number of members or the manufacturing steps. However, the balance weight 25 can be mounted on the core of the rotor 22A at a later time. Therefore, the mounting the balance weight 25 on the core of the rotor 22A is more flexible in the manufacturing steps than the formation of the balance holes in the core of the rotor 22A.

In light of the above, by forming the balance holes in the core of the rotor 22A, the load balance of the rotor 22A can be roughly adjusted. Then, by mounting the balance weight 25 with a suitable number on the core of the rotor 22A at a later time, the load balance of the rotor 22A can be finely adjusted. Although the mounting the balance weight 25 on the core of the rotor 22A causes an increase in the number of members or the manufacturing steps, the load balance of the rotor 22A can be finely adjusted more suitably, by use of the balance weight 25 and the balance through-holes 24A.

The balance weight 25 used in the present embodiment may be similar to that of the conventional example. For the purpose of fine adjustment of the load balance, a plurality of lighter balance weights may be prepared. By doing so, the load balance of the rotor 22A can be finely adjusted more flexibly, and the members (fastener members, securing members, mounting members, etc.) used to mount the balance weight 25 on the core of the rotor 22A can be simplified. The plurality of balance weights 25 with the same shape, or different shapes may be prepared.

Since the balance weight 25 is not provided on the lower surface of the rotor 22A which faces the oil surface of the lubricating oil 13, a smallest gap can be secured between the rotor 22A and the oil surface of the lubricating oil 13. Since the gap between the rotor 22A and the oil surface of the lubricating oil 13 is secured, it becomes possible to prevent a situation in which the lubricating oil 13 is agitated by the rotation of the rotor 22A. This makes it possible to substantially prevent breakage of the suction valve and the discharge valve, which is caused by an event in which the lubricating oil 13 in a bubble state is suctioned from the suction muffler 38 into the compression chamber 34. In addition, a lower vibration of the sealed refrigerant compressor 10A can be realized by fine adjustment of the load balance, an increase in the height of the sealed refrigerant compressor 10A can be suppressed, and compact configuration (smaller size) of the sealed refrigerant compressor 10A can be realized.

### [Modified Example]

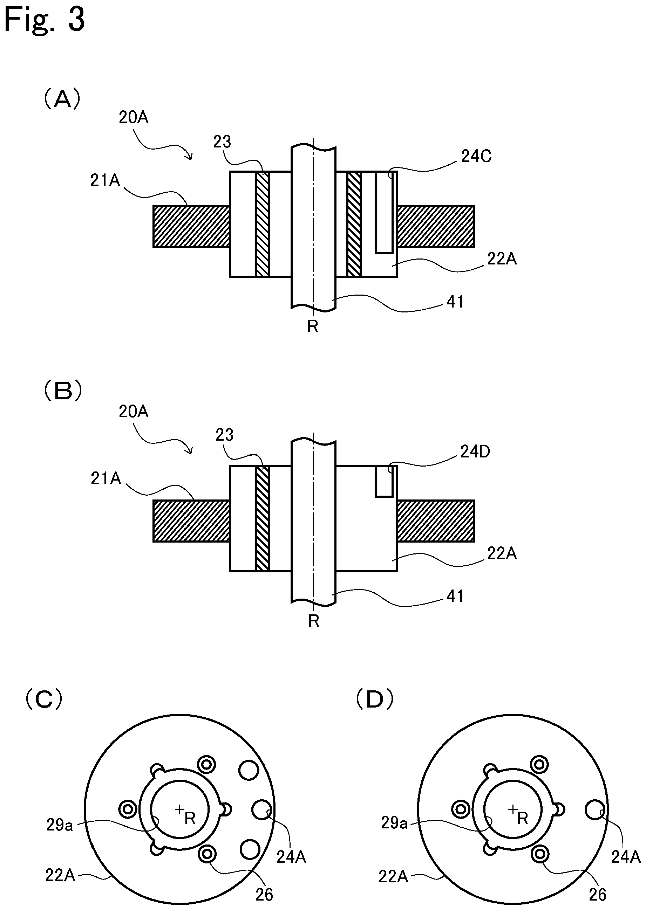

In the present embodiment, as shown in Figs. 1 and 2B, the balance holes are configured as the through-holes (balance through-holes 24A) extending in the direction of the rotational axis R of the rotor 22A. This configuration is merely exemplary. For example, the balance holes may not be the through-holes, and may be, for example, balance blind holes 24C, 24D (blind holes having bottoms) of Figs. 3A and 3B. In a case where the balance holes are the blind holes, the blind holes may be provided only in the upper surface of the rotor 22A as shown in Fig. 3A, may be provided only in the lower surface of the rotor 22A, or may be provided in both of the upper and lower surfaces of the rotor 22A.

In a case where the balance holes are the blind holes, the depths of the balance holes are not particularly limited. The depths of the plurality of blind holes may be equal to each other or different from each other. At this time, for example, as shown in Fig. 3B, it is preferable that the bottom surface of the balance blind hole 24D be set to be higher than the upper surface of the stator 21A. This makes it possible to better adjust the load balance. At least one balance hole may be provided, or a plurality of balance holes may be provided. For example, as shown in Fig. 3C, three or more balance holes (balance through-holes 24A) may be provided. Or, as shown in Fig. 3D, one balance hole (balance through-hole 24A) may be provided. In a case where one balance hole (balance through-hole 24A) is provided for the eccentric location, this balance hole is not point-symmetric or line-symmetric with respect to the rotational axis R of the rotor 22A. The size of the balance hole, namely, the inner diameter of the balance hole is not particularly limited, and may be set within proper ranges according to conditions.

Further, the shape of the balance hole is not particularly limited. The cross-sectional shape (traverse sectional shape) of the balance hole may be a circle as shown in Figs. 2A and 2C. Or, the cross-sectional shape (traverse sectional shape) of the balance hole may be an oval, a rectangle, or a polygon. The longitudinal-sectional shape (spatial shape) of the balance hole may be columnar (cylindrical) with an equal diameter as a whole, as shown in Figs. 1 and 2B. Or, the inner diameter of the balance hole may be gradually changed, or may be changed in a stepwise manner (the balance hole has a stepped portion).

The location of the balance hole formed in the core is not particularly limited. As shown in Fig. 2C, it is preferable that the balance holes (balance through-holes 24A) be positioned outward relative to the permanent magnets 23 when viewed from the direction of the rotational axis R of the rotor 22A (in a plan view). In the present embodiment, each of the permanent magnets 23 is curved so that its center portion is convex toward the inner periphery (toward the rotational axis R of the rotor 22A), namely, its center portion is concave toward the outer periphery. The entire balance through-holes 24A are located outward relative to the concave outer peripheral surfaces of the permanent magnets 23, respectively.

In this layout, a lateral (horizontal) distance between the balance holes and the rotational axis R of the rotor 22A can be increased as much as possible. Therefore, the adjustment amount of load balance by the balance holes can be increased. For example, in a case where the balance through-hole 24A is located between the permanent magnets 23, a part of the balance through-hole 24A may be located outward relative to the permanent magnet 23. In light of this, the balance holes are preferably positioned to be closest to the outer periphery of the rotor 22A.

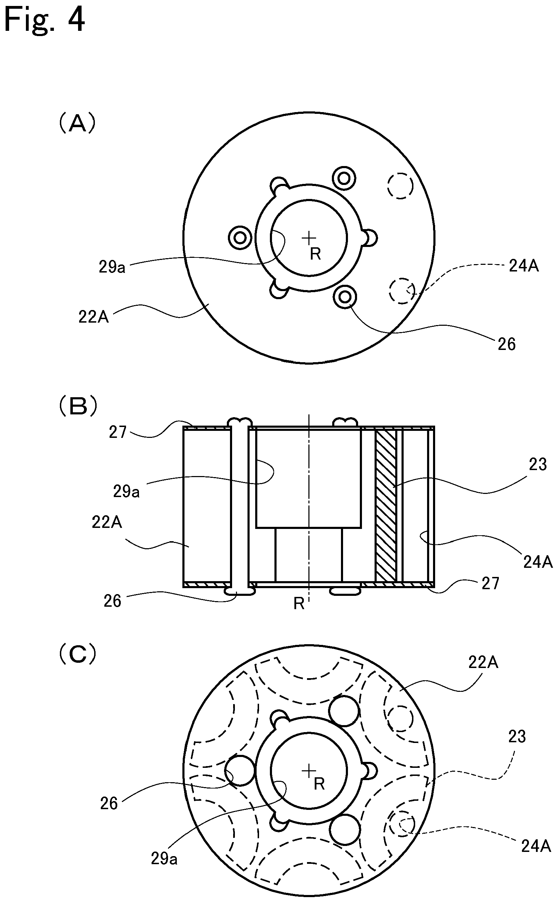

In the present embodiment, as shown in Figs. 1, 2A and 2B, the rotor 22A is provided with the balance weight 25, and the balance through-holes 24A (balance holes) are provided within a portion of the core of the rotor 22A to which the balance weight 25 is fastened. This configuration is merely exemplary. For example, as shown in Figs. 4A to 4C, the balance weight 25 may be omitted. Figs. 4A to 4C are a plan view, a longitudinal sectional view, and a schematic plan view of Figs. 2A to 2C, respectively. The example of Figs. 4A to 4C is the same as that of Figs. 2A to 2C except that the balance weight 25 is omitted in the example of Figs. 4A to 4C.

Although not shown, the balance weight 25 may be mounted on the crankshaft 40 as well as the rotor 22A. In other words, as the balance weight 25, at least one of a rotor balance weight mounted on the rotor 22A and a crankshaft balance weight mounted on the crankshaft 40 may be used. Moreover, as the balance weight 25, a balance weight which is mountable at a location that is other than the rotor 22A and the crankshaft 40 may be used.

As described above, in the sealed refrigerant compressor 10A of the present embodiment, the rotor 22A includes the core and the permanent magnets 23, and does not include the magnet protective members covering the outer peripheral surfaces of the permanent magnets 23 provided in the core. In the sealed refrigerant compressor 10A, the core is preferably provided for the eccentric location with at least one balance hole which is not line-symmetric or point-symmetric with respect to the rotational axis R of the rotor 22A, in order to adjust the load balance during the rotation of the rotor 22A. This makes it possible to suppress or avoid the disorder of the magnetic field attributed to the balance holes from substantially affecting the electric component 20A, even in the configuration in which the balance holes are non-symmetric with respect to the rotational axis R.

Therefore, the size of the balance hole(s) can be reduced, and the shape of the balance hole(s) can be simplified. The balance holes may be provided at any locations except a configuration in which the balance holes are symmetric with respect to the rotational axis R of the rotor 22A. Therefore, depending on the unbalanced load state of the sealed refrigerant compressor 10A, the balance hole with a simple structure can be provided more flexibly. Since the load of the rotor 22A can be adjusted into an unbalanced state, the load balance of the whole of the sealed refrigerant compressor 10A can be adjusted well. As a result, the sealed refrigerant compressor 10A can realize a lower vibration and a smaller size.

### (Embodiment 2)

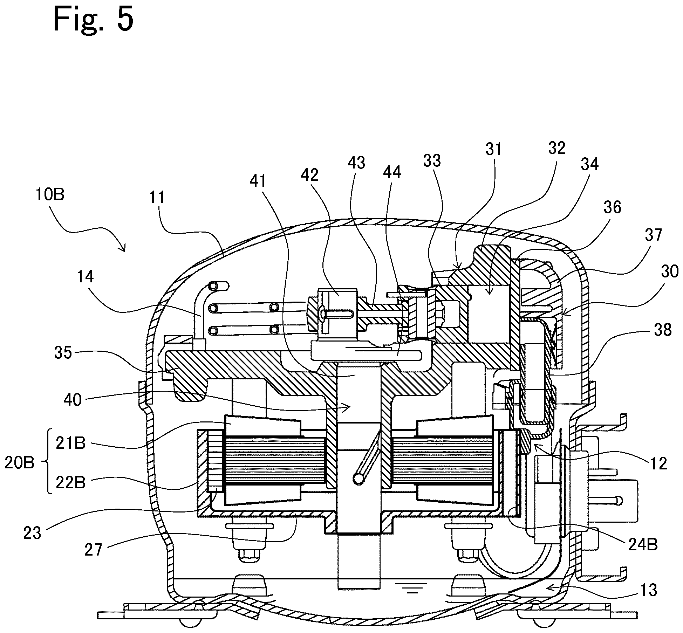

The above-described sealed refrigerant compressor 10A of Embodiment 1 includes the electric component 20A which is the inner rotor motor. This is merely exemplary. An electric component may be an outer rotor motor. Specifically, as shown in Fig. 5, a sealed refrigerant compressor 10B according to Embodiment 2 includes an electric component 20B and the compression component 30 (compressor body 12) which are accommodated in the sealed container 11, and the refrigerant gas and the lubricating oil 13 are reserved in the sealed container 11, as in the sealed refrigerant compressor 10A according to Embodiment 1. The electric component 20B is the outer rotor motor.

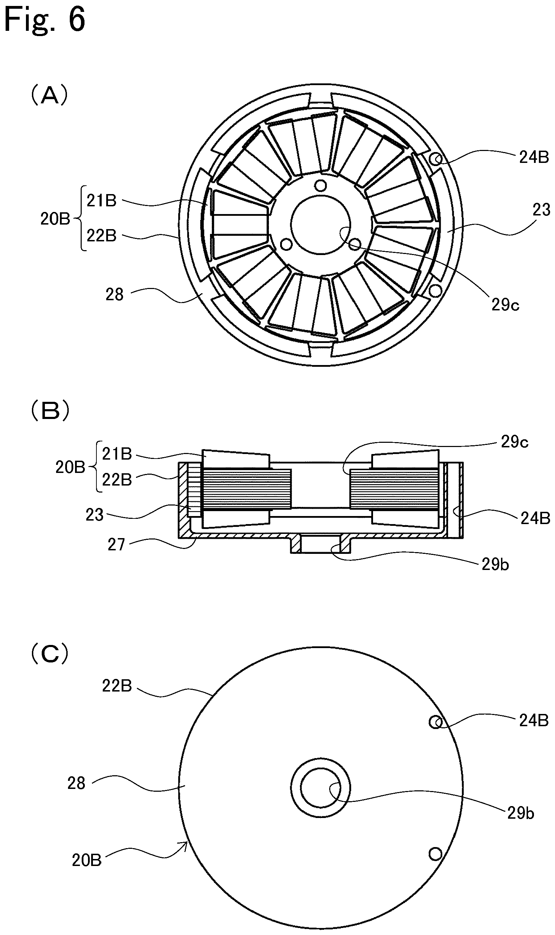

The electric component 20B includes at least a stator 21B and a rotor 22B, as in the electric component 20A according to Embodiment 1. As can be seen from the plan view of Fig. 6A or the longitudinal sectional view of Fig. 6B, the stator 21B has a stator shaft hole 29c in a center portion thereof. The bearing unit 35 of the compression component 30 is secured to the stator shaft hole 29c in a state in which the baring unit 35 is pressingly inserted thereinto.

As shown in Figs. 5, 6A and 6B, the rotor 22B is disposed coaxially with the stator 21B to surround the outer periphery of the stator 21B. The length of the rotor 22B in the direction of the rotational axis R of the rotor 22B is set to be smaller than the diameter of the rotor 22B. In brief, as in the rotor 22A of Embodiment 1, the diameter of the rotor 22B is larger than the length of the rotor 22B (the rotor 22B is short in the vertical direction).

In the rotor 22B, the plurality of permanent magnets 23 are arranged uniformly on the inner periphery of a cylindrical yoke 28 which is rotatable around the outer periphery of the stator 21B. For example, the yoke 28 may have a disc shape with a diameter larger than that of the flange portion 44, or the cylindrical yoke 28 may be secured to the outer periphery of a frame with a diameter larger than that of the flange portion 44. As shown in Fig. 6B and the bottom view of Fig. 6C, the yoke 28 (or the frame) of the rotor 22B has a rotor shaft hole 29b in a center portion thereof. The rotor shaft hole 29b is secured to the lower end of the main shaft section 41 of the crankshaft 40 by welding or the like.

The sealed refrigerant compressor 10B according to the present embodiment is the same as the sealed refrigerant compressor 10A according to Embodiment 1 except that the electric component 20B is the outer rotor motor. Therefore, the constituents of the sealed refrigerant compressor 10B will not be specifically described. The operation of the sealed refrigerant compressor 10B is basically the same as that of the sealed refrigerant compressor 10A. When electric power is supplied from an external power supply to the electric component 20B, a current flows through the stator 21B and a magnetic field is generated, which causes the rotor 22B secured to the main shaft section 41 of the crankshaft 40 to rotate. According to the rotation of the rotor 22B, the crankshaft 40 rotates, and the piston 33 reciprocates inside the cylinder 32 via the connecting rod 43 rotatably mounted on the eccentric shaft section 42. Correspondingly, the refrigerant is compressed by the compression component 30.

As in the sealed refrigerant compressor 10A according to Embodiment 1, in the sealed refrigerant compressor 10B according to the present embodiment, the rotor 22B of the electric component 20B is formed with balance through-holes 24B. In the rotor 22B of the present embodiment, the core as the body is configured as the yoke 27. The plurality of permanent magnets 23 are arranged on the inner peripheral surface of the yoke 28. Therefore, the electric component 20B is the SPM motor. The rotor 22B does not include the magnet protective members covering the inner peripheral surfaces of the plurality of permanent magnets 23 (the rotor 22B does not require the magnet protective members).

The balance through-holes 24B serve to adjust the load balance during the rotation of the rotor 22B. In the present embodiment, two balance through-holes 24B are provided. As shown in Figs. 5 and 6B, the balance through-holes 24B extend in the direction of the rotational axis R of the rotor 22B. As shown in Figs. 6A and 6C, when viewed from the upper surface or lower surface of the rotor 22B, the two balance through-holes 24B are eccentrically located in a portion of the rotor 22B which is in the vicinity of the outer periphery of the rotor 22B. In other words, in the present embodiment, the plurality of balance through-holes 24B of the rotor 22B are provided for the eccentric location in the yoke 28 which is the body of the rotor 22B in such a manner that the balance through-holes 24B are not point-symmetric or line-symmetric with respect to the rotational axis R of the rotor 22B.

The specific configuration of the balance through-holes 24B is the same as that of the balance through-holes 24A according to Embodiment 1. The balance through-holes 24B may be configured as the balance blind holes 24C, 24D (blind holes having bottoms) of Figs. 3A and 3B. As shown in Fig. 6A, at least a part of each of the balance through-holes 24B according to the present embodiment 2 is preferably located outward relative to the permanent magnet 23 when viewed from the direction of the rotational axis R of the rotor 22B (in a plan view), as in the balance through-holes 24A of Embodiment 1.

As described above, in the electric component which is the inner rotor type (Embodiment 1) or the electric component which is the outer rotor type (Embodiment 2), the rotor does not include the magnet protective members covering the permanent magnets, the core is provided with at least one balance hole, and this balance hole is preferably eccentrically located not to be line-symmetric or point-symmetric with respect to the rotational axis of the rotor. Thereby, the load of the rotor can be adjusted into an unbalanced state, and the load balance of the whole of the sealed refrigerant compressor can be adjusted well. As a result, the sealed refrigerant compressor can realize a lower vibration and a smaller size.

### (Embodiment 3)

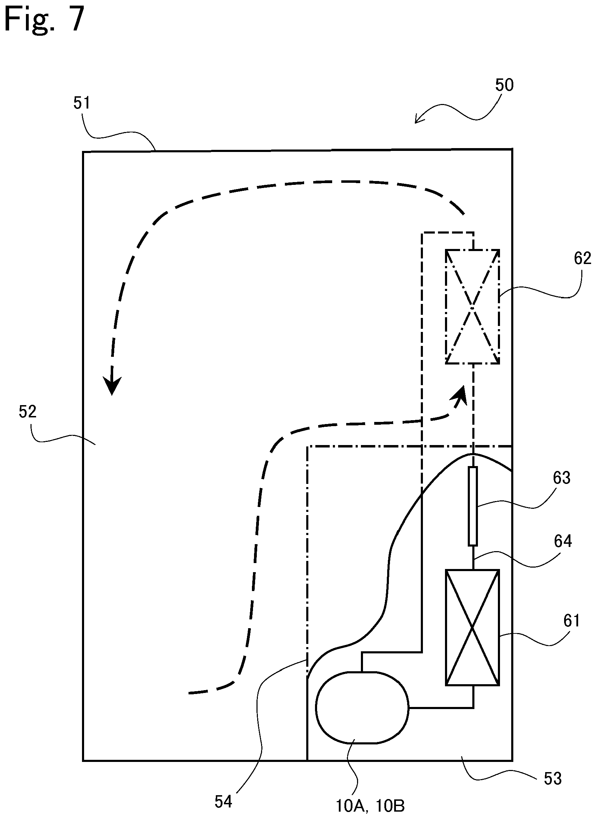

In Embodiment 3, an example of a refrigeration device including the sealed refrigerant compressor 10A of Embodiment 1 or the sealed refrigerant compressor 10B of Embodiment 2 will be described with reference to Fig. 7.

The sealed refrigerant compressor 10A or 10B of the present disclosure can be suitably incorporated into a refrigeration cycle or various devices (refrigeration devices) having a configuration similar to that of the refrigeration cycle. Specifically, for example, the devices may be a refrigerator (refrigerator for household use or refrigerator for business purpose), an ice making machine, a show case, a dehumidifier, a heat pump type hot water supply device, a heat pump type laundry/drying machine, an automatic vending machine, an air conditioner, an air compressor, etc.. However, these are merely exemplary. In the present embodiment, the basic configuration of a refrigeration device 50 will be described in conjunction with an article storage device of Fig. 7, as an exemplary device into which the sealed refrigerant compressor 10A or 10B is incorporated.

The refrigeration device 50 of Fig. 7 includes a refrigeration device body 51 and a refrigerant circuit 60. The refrigeration device body 51 includes a heat insulating casing having an opening and a door which opens and closes the opening of the casing. The refrigeration device body 51 includes in the interior thereof a storage space 52 for storing articles, a mechanical room 53 for storing the refrigerant circuit 60 and the like, and a partition wall 54 which defines the storage space 52 and the mechanical room 53.

The refrigerant circuit 60 is configured such that the sealed refrigerant compressor 10A or 10B, a heat radiator 61, a pressure-reducing device 62, a heat absorbing unit 63, and the like are connected together in an annular shape by use of a pipe 64. In brief, the refrigerant circuit 60 is an exemplary refrigeration cycle using the sealed refrigerant compressor 10A or 10B of the present disclosure.

In the refrigerant circuit 60, the sealed refrigerant compressor 10A or 10B, the heat radiator 61, and the pressure-reducing device 62 are placed in the mechanical room 53, while the heat absorbing unit 63 is placed in the storage space 52 including a blower (not shown in Fig. 6). As indicated by a broken line arrow, the blower agitates cold of the heat absorbing unit 63 to circulate it in the interior of the storage space 52.

In the above-described manner, the refrigeration device 50 of the present embodiment incorporates the sealed refrigerant compressor 10A of Embodiment 1 or the sealed refrigerant compressor 10B according to Embodiment 2. In the sealed refrigerant compressor 10A or 10B of the present disclosure, as described above, the core of the rotor 22A or 22B of the electric component 20A or 20B is not provided with the magnet protective members covering the permanent magnets 23, the core is provided with at least one balance hole, and this balance hole is preferably eccentrically located not to be line-symmetric or point-symmetric with respect to the rotational axis R of the rotor 22A or 22B.

In this configuration, the load of the rotor 22A or 22B can be adjusted into an unbalanced state, and thus the load balance of the whole of the sealed refrigerant compressor 10A or 10B can be adjusted well. As a result, the sealed refrigerant compressor 10A or 10B can realize a lower vibration and a smaller size. Since the refrigerant circuit 60 is operated by the sealed refrigerant compressor 10A or 10B, the refrigeration device 50 can realize a lower vibration and a smaller size. To adjust the load balance, only the balance hole(s) is/are provided without providing the magnet protective member. Therefore, the number of members is not increased, manufacturing steps are not increased, and manufacturing cost can be reduced.

As described above, the present invention can be widely suitably used in the fields of sealed refrigerant compressor constituting the refrigeration cycle. Further, the present invention can be widely used in the fields of refrigeration devices incorporating the sealed refrigerant compressor, such as refrigeration devices for household uses such as electric freezers/refrigerators or air conditioners, or refrigeration devices for business purposes such as a dehumidifier, a show case for business purpose or an automatic vending machine, etc..

### Reference Signs List

- 10A, 10B: sealed refrigerant compressor
- 11: sealed container
- 12: compressor body
- 13: lubricating oil
- 20A, 20B: electric component
- 21A, 20B: stator
- 22A, 22B: rotor
- 23: permanent magnet
- 24A, 24B: balance through-hole (balance hole)
- 24C, 24D: balance blind hole
- 25: balance weight
- 30: compression component
- 31: cylinder block
- 32: cylinder
- 33: piston
- 34: compression chamber
- 35: bearing unit
- 40: crankshaft
- 41: main shaft section
- 42: eccentric shaft section
- 43: connecting rod (coupling section)
- 50: refrigeration device
- 60: refrigerant circuit (refrigeration cycle)
- 61: heat radiator
- 62: pressure-reducing device
- 63: heat absorbing unit
- 64: pipe

## Claims

1. A sealed refrigerant compressor (10A, 10B) comprising:
a sealed container (11) in which lubricating oil (13) is reserved in a lower portion in an interior of the sealed container (11);
an electric component (20A, 20B) accommodated in the sealed container (11); and
a compression component (30) accommodated in the sealed container (11) and configured to be driven by the electric component (20A, 20B),
wherein the compression component (30) includes a cylinder (32) disposed inside the sealed container (11) to extend in a direction crossing a vertical direction, and a piston (33) which is reciprocatable inside the cylinder (32), **characterized in that**
the electric component (20A, 20B) includes a stator (21A, 21B), and a rotor (22A, 22B) having a lower surface facing an oil surface of the lubricating oil (13), and the rotor (22A, 22B) has a shape in which a diameter of the rotor (22A, 22B) is larger than a length of the rotor in a rotational axis direction thereof, and
a core of the rotor (22A, 22B) is provided with at least one balance hole (24A, 24B, 24C, 24D) for adjusting a load balance during rotation of the rotor (22A, 22B).

2. The sealed refrigerant compressor according to claim 1,
wherein the rotor (22A, 22B) includes a permanent magnet (23) and does not include a magnet protective member covering an outer periphery of the permanent magnet (23) provided in the core, and
wherein the at least one balance hole (24A, 24B, 24C, 24D) is located not to be line-symmetric or point-symmetric with respect to a rotational axis of the rotor (22A, 22B).

3. The sealed refrigerant compressor according to claim 2,
wherein the at least one balance hole (24A, 24B) is provided in the core in such a manner that at least a part of the balance hole (24A, 24B) is located outward relative to the permanent magnet (23) when viewed from the rotational axis direction of the rotor (22A, 22B).

4. The sealed refrigerant compressor according to any one of claims 1 to 3,
wherein the compression component (30) is accommodated in the sealed container (11) in such a manner that the compression component is located above the electric component (20A, 20B).

5. The sealed refrigerant compressor according to any one of claims 1 to 4,
wherein the at least one balance hole (24A, 24B, 24C, 24D) extends in the rotational axis direction of the rotor (22A, 22B).

6. The sealed refrigerant compressor according to claim 5,
wherein the at least one balance hole (24A, 24B, 24C, 24D) is a through-hole (24A, 24B).

7. The sealed refrigerant compressor according to any one of claims 1 to 6,
wherein a balance weight (25) is fastened to an upper surface of the rotor (22A, 22B) to adjust a load balance, and
wherein the at least one balance hole (24A, 24B, 24C, 24D) is provided within a portion of the core of the rotor to which the balance weight (25) is fastened.

8. The sealed refrigerant compressor according to any one of claims 1 to 7,
wherein the at least one balance hole (24A, 24B, 24C, 24D) is a blind hole (24C, 24D) having a bottom surface which is set to be higher than an upper surface of the stator (21A, 21B).

9. A refrigeration device comprising the sealed refrigerant compressor (10A, 10B) according to any one of claims 1 to 8.

## Patentansprüche

1. Abgedichteter Kühlmittelverdichter (10A, 10B), enthaltend:
einen abgedichteten Behälter (11), in welchem ein Schmieröl (13) in einem unteren Abschnitt in einem Inneren des abgedichteten Behälters (11) bevorratet ist;
eine in dem abgedichteten Behälter (11) untergebrachte, elektrische Baugruppe (20A, 20B); und
eine Verdichtungsbaugruppe (30), die in dem abgedichteten Behälter (11) untergebracht und dafür ausgelegt ist, von der elektrischen Baugruppe (20A, 20B) angetrieben zu werden,
wobei die Verdichtungsbaugruppe (30) einen Zylinder (32), der innerhalb des abgedichteten Behälters (11) derart angeordnet ist, dass er sich in eine Richtung, die eine vertikale Richtung schneidet, erstreckt, und einen Kolben (33) beinhaltet, welcher innerhalb des Zylinders (32) hin- und herbewegbar ist, **dadurch gekennzeichnet, dass**
die elektrische Baugruppe (20A, 20B) einen Stator (21A, 21B) und einen Rotor (22A, 22B) mit einer unteren Oberfläche, die einer Öloberfläche des Schmieröls (13) zugewandt ist, beinhaltet, und wobei der Rotor (22A, 22B) eine Form aufweist, in welcher ein Durchmesser des Rotors (22A, 22B) größer als eine Länge des Rotors in eine Rotationsachsenrichtung desselben ist, und
ein Kern des Rotors (22A, 22B) mit zumindest einer Ausgleichsbohrung (24A, 24B, 24C, 24D) versehen ist, um einen Lastausgleich während der Rotation des Rotors (22A, 22B) einzustellen.

2. Abgedichteter Kühlmittelverdichter nach Anspruch 1,
wobei der Rotor (22A, 22B) einen Permanentmagneten (23) beinhaltet und kein Magnetschutzelement, welches den äußeren Umfang des in dem Kern vorgesehenen Permanentmagneten (23) abdeckt, beinhaltet, und
wobei die zumindest eine Ausgleichsbohrung (24A, 24B, 24C, 24D) so angeordnet ist, dass sie nicht liniensymmetrisch oder punktsymmetrisch in Bezug auf eine Rotationsachse des Rotors (22A, 22B) ist.

3. Abgedichteter Kühlmittelverdichter nach Anspruch 2,
wobei die zumindest eine Ausgleichsbohrung (24A, 24B) derart in dem Kern vorgesehen ist, dass zumindest ein Teil der Ausgleichsbohrung (24A, 24B) außerhalb, bezogen auf den Permanentmagneten (23), betrachtet von der Rotationsachsenrichtung des Rotors (22A, 22B) aus, angeordnet ist.

4. Abgedichteter Kühlmittelverdichter nach einem der Ansprüche 1 bis 3,
wobei die Verdichtungsbaugruppe (30) derart in dem abgedichteten Behälter (11) untergebracht ist, dass die Verdichtungsbaugruppe oberhalb der elektrischen Baugruppe (20A, 20B) angeordnet ist.

5. Abgedichteter Kühlmittelverdichter nach einem der Ansprüche 1 bis 4,
wobei die zumindest eine Ausgleichsbohrung (24A, 24B, 24C, 24D) sich in die Rotationsachsenrichtung des Rotors (22A, 22B) erstreckt.

6. Abgedichteter Kühlmittelverdichter nach Anspruch 5,
wobei die zumindest eine Ausgleichsbohrung (24A, 24B, 24C, 24D) ein Durchgangsloch (24A, 24B) ist.

7. Abgedichteter Kühlmittelverdichter nach einem der Ansprüche 1 bis 6,
wobei ein Ausgleichsgewicht (25) an einer oberen Oberfläche des Rotors (22A, 22B) zum Einstellen eines Lastausgleichs befestigt ist, und
wobei die zumindest eine Ausgleichsbohrung (24A, 24B, 24C, 24D) innerhalb eines Abschnitts des Rotorkerns, an dem das Ausgleichsgewicht (25) befestigt ist, vorgesehen ist.

8. Abgedichteter Kühlmittelverdichter nach einem der Ansprüche 1 bis 7,
wobei die zumindest eine Ausgleichsbohrung (24A, 24B, 24C, 24D) ein Blindloch (24C, 24D) ist, das eine Bodenfläche aufweist, welche so angeordnet ist, dass sie höher als eine obere Oberfläche des Stators (21A, 21B) ist.

9. Kühlvorrichtung, die den abgedichteten Kühlmittelverdichter (10A, 10B) nach einem der Ansprüche 1 bis 8 enthält.

## Revendications

1. Compresseur de réfrigérant hermétique (10A, 10B) comprenant:
un récipient hermétique (11) dans lequel de l'huile de lubrification (13) est réservée dans une partie inférieure dans un intérieur du récipient hermétique (11);
un composant électrique (20A, 20B) logé dans le récipient hermétique (11); et
un composant de compression (30) logé dans le récipient hermétique (11) et configuré pour être entraîné par le composant électrique (20A, 20B),
dans lequel le composant de compression (30) inclut un cylindre (32) disposé à l'intérieur du récipient hermétique (11) pour s'étendre dans une direction croisant une direction verticale, et un piston (33) qui peut être animé d'un mouvement de va-et-vient à l'intérieur du cylindre (32), **caractérisé en ce que**
le composant électrique (20A, 20B) inclut un stator (21A, 21B), et un rotor (22A, 22B) ayant une surface inférieure faisant face à une surface d'huile de l'huile de lubrification (13), et le rotor (22A, 22B) a une forme dans laquelle un diamètre du rotor (22A, 22B) est plus grand qu'une longueur du rotor dans une direction d'axe de rotation de celui-ci, et
un noyau du rotor (22A, 22B) est pourvu d'au moins un trou d'équilibrage (24A, 24B, 24C, 24D) permettant de régler un équilibre de charge pendant la rotation du rotor (22A, 22B).

2. Compresseur de réfrigérant hermétique selon la revendication 1,
dans lequel le rotor (22A, 22B) inclut un aimant permanent (23) et ne comprend pas d'élément de protection d'aimant recouvrant une périphérie externe de l'aimant permanent (23) disposé dans le noyau, et
dans lequel l'au moins un trou d'équilibrage (24A, 24B, 24C, 24D) est situé de manière à ne pas être axialement ou ponctuellement symétrique par rapport à un axe de rotation du rotor (22A, 22B).

3. Compresseur de réfrigérant hermétique selon la revendication 2,
dans lequel l'au moins un trou d'équilibrage (24A, 24B) est disposé dans le noyau d'une manière telle qu'au moins une partie du trou d'équilibrage (24A, 24B) soit située vers l'extérieur par rapport à l'aimant permanent (23) lorsque vu depuis la direction d'axe de rotation du rotor (22A, 22B).

4. Compresseur de réfrigérant hermétique selon l'une quelconque des revendications 1 à 3,
dans lequel le composant de compression (30) est logé dans le récipient hermétique (11) d'une manière telle que le composant de compression soit situé au-dessus du composant électrique (20A, 20B).

5. Compresseur de réfrigérant hermétique selon l'une quelconque des revendications 1 à 4,
dans lequel l'au moins un trou d'équilibrage (24A, 24B, 24C, 24D) s'étend dans la direction d'axe de rotation du rotor (22A, 22B).

6. Compresseur de réfrigérant hermétique selon la revendication 5,
dans lequel l'au moins un trou d'équilibrage (24A, 24B, 24C, 24D) est un trou traversant (24A, 24B).

7. Compresseur de réfrigérant hermétique selon l'une quelconque des revendications 1 à 6,
dans lequel un poids d'équilibrage (25) est fixé à une surface supérieure du rotor (22A, 22B) pour ajuster un équilibrage de charge, et
dans lequel l'au moins un trou d'équilibrage (24A, 24B, 24C, 24D) est disposé à l'intérieur d'une partie du noyau du rotor auquel est fixé le poids d'équilibrage (25).

8. Compresseur de réfrigérant hermétique selon l'une quelconque des revendications 1 à 7,
dans lequel l'au moins un trou d'équilibrage (24A, 24B, 24C, 24D) est un trou borgne (24C, 24D) ayant une surface inférieure qui est définie pour être plus haute qu'une surface supérieure du stator (21A, 21B).

9. Dispositif de réfrigération comprenant le compresseur de réfrigérant hermétique (10A, 10B) selon l'une quelconque des revendications 1 à 8.
